# EUROPEAN PATENT APPLICATION

(11) **EP 4 807 358 A1**
(43) Date of publication of application: **16.09.2026**
(21) Application number: 25163018.2
(22) Date of filing: 11.03.2025
(51) Int. Cl.: G01N 27/419

(54) **SENSOR WITH LONG-TERM STABILITY**

(71) Applicant: Siemens Aktiengesellschaft, 80333 München (DE)
(72) Inventor: Baader, Mathias, 76829 Landau (DE); Spitznas, Armin, 77975 Ringsheim (DE); Weida, Simon, 76831 Göcklingen (DE)
(74) Representative: Siemens Patent Attorneys

(57) **Abstract**

Sensor with long-term stability. A sensor (27) for estimating a concentration of oxygen, the sensor (27) comprising: a reference terminal (28), a pump and sense terminal (29), a first sensor disk (30a), a boundary member selected from a second sensor disk (30b) and at least one third disk (33), and one or more spacers (31a, 31b), wherein the boundary member (30b, 33), the one or more spacers (31a, 31b) and the reference terminal (28) enclose a sealed chamber (32); the sensor (27) comprising a heater (34) and a pair of electric terminals (35a, 35b) galvanically connected to the heater (34); wherein the boundary member (30b, 33) is interposed between the heater (34) and the sealed chamber (32); the sensor (27) comprising a temperature sensing element (39) and a plurality of electric terminals (40) connected to the temperature sensing element (39); the sensor (27) comprising an electric supply (41).

## Description

### Background

The present disclosure deals with the long-term stability of a sensor, wherein the sensor is part of a combustion appliance. More specifically, the instant disclosure pertains to a sensor such as a flue gas sensor.

A combustion appliance comprises a burner and one or more conduits for supplying the burner with air and/or with fuel. The fuel can be a gaseous fuel and/or a liquid fuel such as oil. The fuel can be a fossil fuel. The fuel can also comprise hydrogen. One or more actuators control the supply of air and/or of fuel. For example, the combustion appliance can comprise a fan to supply the burner with air. The combustion appliance can also comprise one or more valves to control a supply of fuel to the burner.

In addition to these actuators, one or more sensors record signals associated with the combustion. For example, an optical sensor such as an optical flame sensor can monitor the presence of a flame inside the burner. An optical sensor and a circuit for processing signals from the sensor are disclosed in the European patent EP3339736B1. An arrangement comprising a plurality of optical sensors is disclosed in the European patent EP3663646B1.

The patent EP3663646B1 also discloses an ionization electrode. The arrangement of EP3663646B1 comprises an ionization electrode and a first optical flame sensor. A controller processes the signals from these sensors and determines if a flame lift-off condition exists.

Combustion appliances also comprise exhaust conduits and flue gas sensors can be placed inside exhaust gas conduits. Flue gas sensors such as the flue gas sensor of the European patent application EP3783355A1 can be based on metal oxides such as zirconium dioxide. The patent application EP3783355A1 was filed on 26 May 2020 and claims a priority date of 21 August 2019.

A partial pressure of oxygen inside the sensor is determined based on two Nernst voltages. In so doing, a target offset voltage between the two Nernst voltages can, by way of example, be 13 Millivolts at a temperature near 973 Kelvins. A signal indicative of oxygen in the exhaust gas of the combustion appliance of EP3783355A1 is recorded. A controller uses this signal to control combustion inside a combustion chamber of the combustion appliance.

An international patent application WO2009/046927A2 was filed on 2 October 2008. The application was published on 16 April 2009. A priority date of 5 October 2007 is claimed. WO2009/046927A2 deals with an ion conductor for a gas sensor.

The sensor of WO2009/046927A2 comprises a resistive heater and the resistive heater is protected against adverse influences caused by flue gas. The resistive heater is used to attain the operating temperature of the gas sensor and to optimise sensitivity. The resistive heater is situated on an electrically insulating substrate such as aluminum oxide. The resistive heater can comprise a thin, electrically conductive film.

A gas sensor in accordance with WO2009/046927A2 can also comprise a sensor element. A signal originating from the sensor element can be employed to determine a concentration of a gaseous fluid such as nitrogen oxide.

A European patent application EP0964246A2 was filed by PANAMETRICS on 11 June 1999. The application was published on 15 December 1999. A priority date of 12 June 1998 is claimed. EP0964246A2 deals with an internally calibrated oxygen sensor.

EP0964246A2 discloses a zirconia-based sensor which operates at temperatures of approximately 973 Kelvins. The sensor comprises a body and that body can extend into an exhaust gas path of a smokestack of a power plant. The sensor body has a zirconium oxide wall, wherein the inner and the outer surfaces of these walls have porous conductive coatings. A conductor passing externally of a chamber affords operation of the sensor as an oxygen pump.

A gas sensor is envisaged wherein a heater element is fabricated in the sensor body itself. The sensor of EP0964246A2 may also provide one or more thermal sensing elements.

A German patent application DE102014211321A1 was filed by Robert Bosch GmbH on 13 June 2014. The application was published on 17 December 2015. DE102014211321A1 deals with operating a sensor configuration.

The sensor of DE102014211321A1 is based on zirconium dioxide and provides a sensor element. The sensor configuration also comprises a control unit. The control unit provides two electric capacitances to mitigate disturbances. A characteristic curve of the arrangement of DE102014211321A1 may not be entirely linear. A correction of that non-linear characteristic curve may depend on the two capacitances. The characteristics of those two capacitances do, however, depend on temperature and exhibit long-term drift.

Accordingly, a sensor based on zirconium dioxide may comprise a sealed chamber and heater which is situated adjacent a layer of aluminum oxide. The sensor can also comprise one or more temperature sensors and these temperature sensors are separate from the heater. Parts of the sensor exhibit long-term drift and their characteristics can depend on temperature. The instant disclosure provides a sensor wherein adverse effects of drift are mitigated.

### Summary

The instant disclosure deals with an improved sensor, wherein a temperature sensing element is galvanically isolated from a heater. The galvanic isolation mitigates adverse influences of the electric signals that are applied to the heater on the temperature sensing element. The galvanic isolation also mitigates adverse influences of those signals on any circuit processing signals recorded by the temperature sensing element.

The sensor of the present disclosure preferably comprises a gas sensor such as a flue gas sensor. In a special embodiment, the sensor of the present disclosure is a gas sensor such as a flue gas sensor. The sensor comprises two sensor disks that are largely made of a metal oxide such as zirconium dioxide. The sensor also comprises a reference electrode and a pump and sense electrode for recording signals indicative of a concentration of oxygen such as molecular oxygen (O₂).

The sensor comprises a heater such as an electric heater. The heater functions to heat the sensor to its operating temperature. More specifically, the heater functions to heat the sensor disks to their operating temperatures. A pair of terminals such as a pair of electric wires electrically connects to the heater. The heater is thereby supplied with electric energy to be converted into heat. A source such as a source of alternating current or of direct current and/or a rectifier is used to apply an electric current to the heater.

The sensor comprises a temperature sensing element. The temperature sensing element functions to record a signal indicative of a temperature of the sensor. More specifically, the temperature sensing element functions to record a signal indicative of a temperature of the gas sensor.

A plurality of terminals such as a plurality of electric wires electrically connects to the temperature sensing element. A first pair of terminals such as a first pair of electric wires is typically used to apply an electric current to the temperature sensing element. A second pair of terminals such as a second pair of electric wires is then used to record an electric voltage from the temperature sensing element. The electric voltage is mapped to a temperature via a circuit.

The circuit can comprise an amplifier to amplify signals originating from the temperature sensing element. The (amplified) signal is then fed to an analog-to-digital converter or to a sigma-delta modulation circuit. Afterwards, the signal can be processed by a controller such as a microcontroller and/or a microprocessor and/or an application-specific integrated circuit.

The controller can also output a signal that is typically amplified. The amplified signal is applied to the temperature sensing element in the form of an electric current. The electric current causes a voltage drop inside the temperature sensing element which is recorded and processed by the circuit as described above.

A transformer can be used to achieve galvanic isolation between the temperature sensing element on the one hand and the heater on the other hand. The same transformer is then used to achieve galvanic isolation between the circuit on the one hand and the source on the other hand. The transformer typically has galvanically isolated primary and secondary windings. In other words, the transformer is not an autotransformer.

To that end, an inverter can use a direct electric current originating from the circuit to produce an alternating electric current. The alternating electric current is transformed using the transformer. In a first embodiment, the transformed alternating current can then be fed to a rectifier to produce another direct current which is applied to the heater. In a second embodiment, the transformed alternating current is applied to the heater.

An inverter can also use a direct electric current originating from the source to produce an alternating electric current. The alternating electric current is transformed using the transformer. The transformed alternating current can then be fed to a rectifier to produce another direct current which is used to supply the circuit.

It is worth stressing that the galvanic isolation via the transformer is exemplary and that other approaches can be used to achieve galvanic isolation.

The temperature sensing element is typically separated from the heater by at least one of
- a passivation layer,
- a distance member,
- a protective layer.

The temperature sensing element can also be separated from the heater by at least two of
- a passivation layer,
- a distance member,
- a protective layer.

The temperature sensing element can still be separated from the heater by
- a passivation layer,
- a distance member, and
- a protective layer.

The separation between the temperature sensing element and the heater mitigates adverse influences of signals applied to the heater on signals recorded from the temperature sensing element.

### Brief description of the drawings

Various features will become apparent to those skilled in the art from the following detailed description of the disclosed non-limiting embodiments. The drawings that accompany the detailed description can be briefly described as follows:
FIG 1 schematically illustrates a combustion appliance having a plurality of actuators and sensors and busses connected thereto.
FIG 2 schematically shows a flue gas sensor comprising a sealed chamber, a heater and an outer temperature measurement member.
FIG 3 schematically shows a flue gas sensor comprising a sealed chamber, a heater and an inner temperature measurement member.
FIG 4 schematically illustrates details of the galvanic isolation.
FIG 5 schematically illustrates a transformer galvanically isolating a temperature sensing element from a heater according to a first embodiment.
FIG 6 schematically illustrates a transformer galvanically isolating a temperature sensing element from a heater according to a second embodiment.

### Detailed description

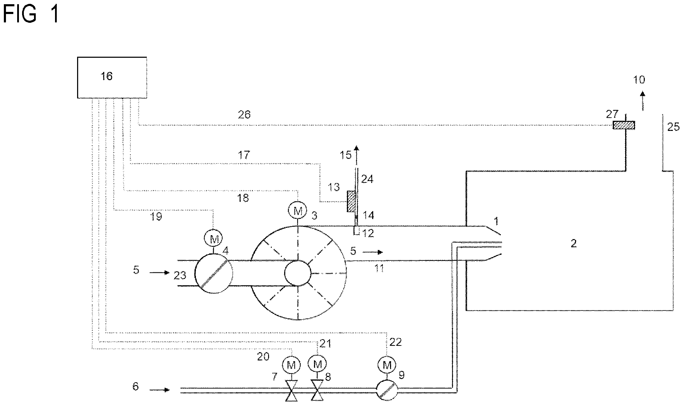

FIG 1 shows a system comprising a burner 1, a heat consumer 2, a fan 3 with a speed that can be set, and a damper 4 with motorized adjustment. The damper 4 with motorized adjustment is arranged after the air inlet 23. The heat consumer 2 (heat exchanger) can, for example, comprise a hot water vessel and/or a boiler. The heat consumer 2 can, for example, also be a boiler and/or a domestic hot water boiler and/or a residential hot water boiler.

The throughflow (particle flow and/or mass flow) 5 of the fluid air can be set in accordance with FIG 1 by the damper 4 with motorized adjustment. The throughflow 5 can also be set by specifying the rotational speed of the fan 3.

In the absence of the damper 4, the air throughflow 5 can also be adjusted just by setting the speed of the fan 3. Pulse-width modulation comes into consideration for adjusting the speed of the fan 3 for example. In accordance with another form of embodiment the motor of the fan 3 is connected to a converter. The speed of the fan 3 is thus adjusted via the frequency of the converter.

In accordance with another form of embodiment the fan runs at a fixed, invariable speed. The air throughflow 5 is then defined by the position of the damper 4. In addition, further actuators are possible, which change the air throughflow 5. In such cases an adjustment of the burner nozzle or of an adjustable flap in the waste gas vent duct can be involved.

The throughflow 6 (for example particle flow and/or mass flow) of the fluid fuel is set by a fuel damper 9. In accordance with one form of embodiment the fuel damper 9 is a valve such as a valve with motorized adjustment.

Combustible gases such as natural gas and/or propane gas and/or hydrogen are considered as fuel for example. A liquid fuel such as heating oil is, by way of non-limiting example, also considered as a fuel. In this case the damper 9 is replaced by an oil pressure regulator with motorized adjustment in the return of the oil nozzle. The safety shutdown function and/or closing function are implemented by the redundant safety valves 7, 8. In accordance with a specific form of embodiment the safety valves 7, 8 and the fuel damper 9 are realized as an integrated unit.

Fuel is mixed into the flow 5 of air in and/or before the burner 1. The mixture is burned in the combustion chamber of the heat consumer 2. The heat is transported onwards in the heat consumer 2. For example, heated water is taken away via a pump to heating elements and/or in industrial firing systems an item is heated (directly). The exhaust gas flow 10 is vented via an exhaust gas path 25, for example a chimney.

A controller 16 coordinates actuators so that the correct throughput 6 of fuel is set by setting the damper 9 for the corresponding air throughflow 5. The controller 16 can comprise a system controller. The controller 16 can also be a system controller. Thus, the desired air-to-fuel ratio λ is produced. In accordance with a specific form of embodiment the (system) controller 16 is designed as a microcontroller. In accordance with another specific form of embodiment the (system) controller 16 is designed as a microprocessor.

To this end, the controller 16 sets the fan 3 via the signal line 18 to the values stored in the controller 16. Communication between the controller 16 and the fan 3 preferably involves a digital communication bus. Communication between the controller 16 and the fan 3 advantageously involves a digital communication protocol.

The air damper 4 is set via the signal line 19 to the values stored in the system controller 16. Communication between the controller 16 and the damper 4 preferably involves a digital communication bus. Communication between the controller 16 and the damper 4 advantageously involves a digital communication protocol.

Preferably the controller 16 comprises a memory such as a non-volatile memory. Those values are stored in the memory. Ideally, those values are stored in the non-volatile memory. The setting of the fuel damper 9 is specified via the signal line 22. Communication between the controller 16 and the damper 9 preferably involves a digital communication bus. Communication between the controller 16 and the damper 9 advantageously involves a digital communication protocol.

In operation the safety shut-off valves 7, 8 are set via the signal lines 20, 21. Communication between the controller 16 and the valves 7, 8 preferably involves a digital communication bus. Communication between the controller 16 and the valves 7, 8 advantageously involves a digital communication protocol.

If faults are to be uncovered in a component selected from
- the damper 4,
- the damper 9,
- the fan 3,
this can be done by a safety-related feedback of the position of the damper 4 via at least one of:
- the signal line 19 for the damper 4,
- the bidirectional signal line 19 for the damper 4,
- the signal line 22 for the damper 9,
- the bidirectional signal line 22 for the damper 9,
- the signal line 18 for the fan 3,
- the bidirectional signal line 18 for the fan 3.

A safety-related position message can be realized for example via redundant position generators. If safety-related feedback about the rotational speed is required, this can be done via the (bidirectional) signal line 18 using speed sensors such as safety-related speed sensors. Redundant speed sensors can be used for this purpose for example and/or the measured speed can be compared with required speed. The activation and feedback signals can be transferred via different signal lines and/or via a bidirectional bus. The bidirectional preferably comprises a digital, bidirectional bus. The bidirectional ideally is a digital, bidirectional bus.

Fitted before the burner is a side duct 24. A small amount 15 of outflowing air flows outwards through the side duct 24. Ideally the air flows out in this case into the space from which the fan 3 sucks in the air. In accordance with another form of embodiment the outflowing air flows out into the firing space of the heat consumer 2. In accordance with another form of embodiment the air flows back into the air duct 11. In this case a flow resistance element is arranged (at least locally) in the air duct 11 between tapping off point and return. The side duct 24, together with the burner 1 and the exhaust gas path 25 of the heat consumer 2, form a flow divider.

A flow resistance element such as an element in the form of a diaphragm 14 is fitted in the side duct 24. With the flow resistance element 14 the amount 15 of outflowing air of the flow divider is defined.

In accordance with a specific form of embodiment, the admittance surface of the flow resistance element 14 can be adjusted by a motor. To avoid and/or to remedy blockages caused by suspended particles, the admittance surface of the flow resistance element 14 can be adjusted. The flow resistance element 14 can be opened and/or can be closed. The admittance surface of the flow resistance element 14 is preferably adjusted multiple times to avoid and/or to remedy blockages.

With this arrangement the throughflow 15 (particle flow and/or mass flow) through the side duct 24 is a measure for the air flow 5 through the burner 1. In this case influences resulting from changes in the density of the air for example are compensated for by changes in the absolute pressure. These influences can also be compensated by the air temperature through the mass flow sensor 13. Normally the flow 15 is very much smaller than the air flow 5. In accordance with a specific form of embodiment the (particle and/or mass) flow 15 through the side duct 24 is smaller by at least a factor of one hundred, preferably by at least a factor of one thousand, further preferably by at least a factor of ten thousand than the (particle and/or mass) flow 5 through the air duct 11.

Sensors such as the mass flow sensor 13 allow measurement at high flow speeds, specifically in conjunction with combustion devices in operation. Typical values of such flow speeds lie in ranges between 0.1 metres per second and five metres per second, ten metres per second, or twenty metres per second. Typical values of such flow speeds can also lie in ranges between 0.1 metres per second and fifty metres per second, or even one hundred metres per second. Mass flow sensors that are suitable for the present disclosure are for example OMRON^{®} D6F-W or SENSOR TECHNICS^{®} WBA-type sensors. The usable range of these sensors typically begins at speeds between 0.01 metres per second and 0.1 metres per second and ends at a speed for example of five metres per second. The usable range of these sensors can also end at ten metres per second, fifteen metres per second, twenty metres per second, or even one hundred metres per second. In other words, lower limits such as 0.1 metres per second can be combined with upper limits such as five metres per second or ten metres per second. Lower limits such as 0.1 metres per second can also be combined with upper limits such as fifteen metres per second, or twenty metres per second. Lower limits such as 0.1 metres per second can even be combined with upper limits such as one hundred metres per second.

Communication between the controller 16 and the sensor 13 preferably involves a digital communication bus. Communication between the controller 16 and the sensor 13 advantageously involves a digital communication protocol.

A flue gas sensor 27 can be arranged inside or adjacent the exhaust gas path 25. In a special embodiment, the flue gas sensor 27 is arranged inside and/or adjacent a chimney. Details of a sensor such as the flue gas sensor 27 are disclosed in the European patent application EP3783355A1.

Communication between the system controller 16 and the flue gas sensor 27 preferably involves a digital communication bus. Communication between the controller 16 and the flue gas sensor 27 advantageously involves a digital communication protocol.

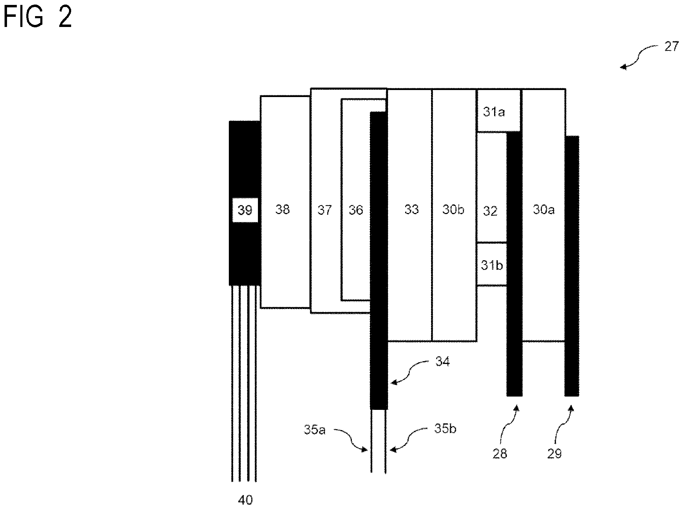

Now turning to FIG 2, a flue gas sensor 27 according to the instant disclosure is illustrated. The gas sensor 27 comprises a reference terminal 28 and a pump and sense terminal 29.

The pump and sense terminal 29 electrically and mechanically connects to a second side of a first sensor disk 30a. The second side of the first sensor disk 30a is disposed opposite the first side of the first sensor disk 30a.

The first sensor disk 30a is preferably made of a metal oxide such as zirconium dioxide (ZrO₂). In an embodiment, the first sensor disk 30a is made of at least ninety percent by weight of zirconium dioxide. The remainder comprises at least one further compound from a group consisting of yttrium oxide, ceric oxide, magnesium oxide, calcium oxide, and hafnium oxide.

A second sensor disk 30b can be made of a metal oxide such as zirconium dioxide (ZrO₂). In an embodiment, the second sensor disk 30b is made of at least ninety percent by weight of zirconium dioxide. The remainder comprises at least one further compound such as hafnium oxide.

The reference terminal 28 electrically and mechanically connects to a first side of the first sensor disk 30a. The first side of the first sensor disk 30a faces the second sensor disk 30b.

The second sensor disk 30b and the first sensor disk 30a are ideally made of a metal oxide such as zirconium dioxide (ZrO₂). In an embodiment, the second sensor disk 30b and the first sensor disk 30a are made of at least ninety percent by weight of zirconium dioxide. The remainder comprises at least one further compound from a group consisting of yttrium oxide, ceric oxide, magnesium oxide, calcium oxide, and hafnium oxide.

The second sensor disk 30b, the first sensor disk 30a, one or more spacers 31a, 31b, and the reference electrode 28 enclose a sealed chamber 32. The second sensor disk 30b, the first sensor disk 30a, the one or more spacers 31a, 31b, and the reference electrode 28 seal the chamber 32 from the ambient. The one or more spacers 31a, 31b separate the second sensor disk 30b from the first sensor disk 30a.

The one or more spacers 31a, 31 b can, by way of non-limiting example, be made of glass. The one or more spacers 31a, 31b can, by way of another non-limiting example, comprise or be made of platinum. A ring made of glass can seal the arrangement.

In an embodiment, the one or more spacers 31a, 31b conduct electricity and a terminal is mounted to the second sensor disk 30b. An electric path exists between the terminal mounted to the second sensor disk 30b, the one or more spacers 31a, 31b and the reference terminal 28. Likewise, an electric path can exist between the terminal mounted to the second sensor disk 30b, the one or more spacers 31a, 31b and the reference electrode 28.

Where the one or more spacers 31a, 31b conduct electricity, they exhibit resistivities of 10⁻¹ Ohm·m or less. Preferably, the one or more spacers 31a, 31b exhibit resistivities of 10⁻² Ohm·m or less. Ideally, the one or more spacers 31a, 31b exhibit resistivities of 10⁻³ Ohm·m or less. These resistivities are based on a temperature of 293 Kelvins, on a voltage of nine volts and on the application of direct current. In operation, the one or more spacers 31a, 31b exhibit resistivities of 10° Ohm·m or less. Preferably, the one or more spacers 31a, 31b exhibit resistivities of 10⁻¹ Ohm·m or less. Ideally, the one or more spacers 31a, 31b exhibit resistivities of 10⁻² Ohm·m or less. These operational resistivities are based on a temperature of 973 Kelvins, on a voltage of nine volts and on the application of direct current.

In an embodiment, the one or more spacers 31a, 31b comprise an annular spacer. The annular spacer 31a, 31b is arranged as a single member between the second sensor disk 30b and the first sensor disk 30a. In another embodiment, the one or more spacers 31a, 31b consist of an annular spacer. The annular spacer 31a, 31b is arranged as a single member between the second sensor disk 30b and the first sensor disk 30a.

In an alternate embodiment, the second sensor disk 30b, the first sensor disk 30a, a plurality of spacers 31a, 31b, and the reference electrode 28 enclose the sealed chamber 32. The second sensor disk 30b, the first sensor disk 30a, and the plurality of spacers 31a, 31b, and/or the reference electrode 28 seal the chamber 32 from the ambient. The plurality of spacers 31a, 31b separates the second sensor disk 30b and the first sensor disk 30a. The plurality of spacers 31a, 31b can, by way of non-limiting example, be made of glass.

A substrate disk 33 is mounted to the second sensor disk 30b. The substrate disk 33 can, by way of non-limiting example, be made of aluminum oxide ceramics (Al₂O₃). According to a special embodiment, the substrate disk 33 is made of aluminum oxide ceramics with more than ninety-two percent purity. In a preferred embodiment, the substrate disk 33 is made of aluminum oxide with ninety-six percent purity. In yet another embodiment, aluminum oxide with purity above ninety-nine percent is employed. Higher levels of purity offer benefits in terms of mechanical tightness, mechanical brittleness, and dielectric strength. According to an aspect, the substrate disk 33 and second sensor disk 30b are joined by ceramic adhesives.

The substrate disk 33 advantageously is electrically insulating. That is, the substrate disk 33 exhibits a resistivity at 293 Kelvins, at nine Volts and under the application of direct current, of at least 10¹³ Ohm·m. Preferably, the substrate disk 33 exhibits a volume resistivity at 293 Kelvins, at nine Volts and under the application of direct current, of at least 10¹⁴ Ohm·m. More preferably, the substrate disk 33 exhibits a resistivity at 293 Kelvin, at nine Volts and under the application of direct current, of at least 10¹⁶ Ohm·m.

In operation, the disk 33 can exhibit a resistivity at 973 Kelvins, at nine Volts and under the application of direct current, of at least 10¹² Ohm·m. Preferably, the substrate disk 33 exhibits a volume resistivity at 973 Kelvins, at nine Volts and under the application of direct current, of at least 10¹³ Ohm·m. More preferably, the substrate disk 33 exhibits a resistivity at 973 Kelvin, at nine Volts and under the application of direct current, of at least 10¹⁵ Ohm·m.

In an embodiment, the substrate disk 33 is a substrate disk for a heater 34. The heater 34 is arranged adjacent to the substrate disk 33. The heater 34 can abut the substrate disk 33. The substrate disk 33 is interposed between the heater 34 and the second sensor disk 30b. In an embodiment, the heater 34 comprises a metallic conductor. In a special embodiment, the heater 34 is a metallic electric conductor.

A pair of terminals 35a, 35b electrically and mechanically connects to the heater 34. The heater 34 can thus be supplied with an electric current via the pair of terminals 35a, 35b thereby allowing the electric current to heat up the flue gas sensor 27. In an embodiment, the amount of heating power P dissipated by the heater 34 is proportional to the square of an electric current *I* through the heater 34: $P ∝ {I}^{2}$

Preferably, at least one of the terminals 35a, 35b galvanically connects to the heater 34. Ideally, the terminals 35a, 35b each galvanically connects to the heater 34. Preferably, at least one of the terminals 35a, 35b is soldered and/or is welded to the heater 34. Ideally, each of the terminals is soldered and/or is welded to the heater 34.

A strain relief member can be applied where at least one of the terminals 35a, 35b connects to the heater 34. The mechanical resilience and robustness of the connection is thus improved. The strain relief member can, by way of non-limiting example, comprise a portion made of glass. The strain relief member can, by way of non-limiting example, be made of glass.

A strain relief member can also be applied where all the terminals 35a, 35b connect to the heater 34. The mechanical resilience and robustness of the connection is thus improved. The strain relief member can, by way of non-limiting example, comprise a portion made of glass. The strain relief member can, by way of non-limiting example, be made of glass.

Preferably, at least one of the terminals 35a, 35b comprises a metallic electric conductor. It is even envisaged that at least one of the terminals 35a, 35b is a metallic electric conductor. Ideally, the terminals 35a, 35b each comprise a metallic electric conductor. In a special embodiment, each of the terminals 35a, 35b is a metallic electric conductor. It is even envisaged that each of the terminals 35a, 35b is a metallic electric conductor.

The heater 34 has a second side facing the substrate disk 33 and a first side facing a passivation layer 36. The first side of the heater 34 is different from the second side of the heater 34. The first side of the heater 34 is arranged opposite the second side of the heater 34.

In an embodiment, the first terminal 35a electrically and mechanically connects to the heater 34 coming from the first side of the heater 34. The second terminal 35b electrically and mechanically connects to the heater 34 coming from the second side of the heater 34. In a galvanically connected embodiment, the first terminal 35a galvanically connects to the heater 34 coming from the first side of the heater 34. The second terminal 35b galvanically connects to the heater 34 coming from the second side of the heater 34.

A portion of the passivation layer 36 is situated on the first side of the heater 34. Another portion of the passivation layer 36 abuts the substrate disk 33.

The passivation layer 36 can, by way of non-limiting example, be made of aluminum oxide ceramics (Al₂O₃). According to a special embodiment, the passivation layer 36 is made of aluminum oxide ceramics with more than ninety-two percent purity. In a preferred embodiment, the passivation layer 36 is made of aluminum oxide with ninety-six percent purity. In yet another embodiment, aluminum oxide with purity above ninety-nine percent is employed. Higher levels of purity offer benefits in terms of mechanical tightness, mechanical brittleness, and dielectric strength.

The passivation layer 36 advantageously is electrically insulating. That is, the passivation layer 36 exhibits a resistivity at 293 Kelvins, at nine Volts and under the application of direct current, of at least 10¹³ Ohm·m. Preferably, the passivation layer 36 exhibits a volume resistivity at 293 Kelvins, at nine Volts and under the application of direct current, of at least 10¹⁴ Ohm·m. More preferably, the passivation layer 36 exhibits a resistivity at 293 Kelvin, at nine Volts and under the application of direct current, of at least 10¹⁶ Ohm·m.

In operation, the layer 36 can exhibit a resistivity at 973 Kelvins, at nine Volts and under the application of direct current, of at least 10¹² Ohm·m. Preferably, the passivation layer 36 exhibits a volume resistivity at 973 Kelvins, at nine Volts and under the application of direct current, of at least 10¹³ Ohm·m. More preferably, the passivation layer 36 exhibits a resistivity at 973 Kelvin, at nine Volts and under the application of direct current, of at least 10¹⁵ Ohm·m.

It is envisaged that the substrate disk 33 and the passivation layer 36 are made of aluminum oxide ceramics (Al₂O₃). According to a special embodiment, the substrate disk 33 and the passivation layer 36 are each made of aluminum oxide ceramics with more than ninety-two percent purity. In a preferred embodiment, the substrate disk 33 and the passivation layer 36 are each made of aluminum oxide with ninety-six percent purity. In yet another embodiment, aluminum oxide with purity above ninety-nine percent is employed. Higher levels of purity offer benefits in terms of mechanical tightness, mechanical brittleness, and dielectric strength.

According to an aspect of the flue gas sensor 27, the substrate disk 33 and the passivation layer 36 are unitary.

A shortest distance between the heater 34 and the second sensor disk 30b defines a direction. The substrate disk 33 has a thickness in this direction. The passivation layer 36 also has a thickness in the same direction.

The thickness of the passivation layer 36 is typically different from the thickness of the substrate disk 33. The passivation layer 36 can, by way of non-limiting example, be thinner than the substrate disk 33 at least by a factor two. The passivation layer 36 can, by way of another non-limiting example, be thinner than the substrate disk 33 at least by a factor five. The passivation layer 36 can still be thinner than the substrate disk 33 at least by a factor ten.

A protective layer 37 covers the passivation layer 36. The passivation layer 36 is thus enclosed by the protective layer 36, by the heater 34, and by the substrate disk 33. The protective layer 37 can comprise a protective glass layer. The protective layer 37 can also be a protective glass layer.

The direction used for measuring thicknesses of the substrate disk 33 and of the passivation layer 36 can also be used to measure a thickness of the protective layer 37. The thickness of the protective layer 37 is typically different from the thickness of the substrate disk 33. The protective layer 37 can, by way of non-limiting example, be thinner than the substrate disk 33 at least by a factor two. The protective layer 37 can, by way of another non-limiting example, be thinner than the substrate disk 33 at least by a factor five. The protective layer 37 can still be thinner than the substrate disk 33 at least by a factor ten.

More specifically, the direction used for measuring thicknesses of the substrate disk 33 can also be used to measure a thickness of the protective glass layer 37. The thickness of the protective glass layer 37 is typically different from the thickness of the substrate disk 33. The protective glass layer 37 can, by way of non-limiting example, be thinner than the substrate disk 33 at least by a factor two.

The protective glass layer 37 can, by way of another non-limiting example, be thinner than the substrate disk 33 at least by a factor five. The protective glass layer 37 can still be thinner than the substrate disk 33 at least by a factor ten.

The protective layer 37 advantageously is electrically insulating. That is, the protective layer 37 exhibits a resistivity at 293 Kelvins, at nine Volts and under the application of direct current, of at least 10¹³ Ohm·m. Preferably, the protective layer 37 exhibits a volume resistivity at 293 Kelvins, at nine Volts and under the application of direct current, of at least 10¹⁴ Ohm·m. More preferably, the protective layer 37 exhibits a resistivity at 293 Kelvin, at nine Volts and under the application of direct current, of at least 10¹⁶ Ohm·m.

In operation, the layer 37 can exhibit a resistivity at 973 Kelvins, at nine Volts and under the application of direct current, of at least 10¹² Ohm·m. Preferably, the protective layer 37 exhibits a volume resistivity at 973 Kelvins, at nine Volts and under the application of direct current, of at least 10¹³ Ohm·m. More preferably, the protective layer 37 exhibits a resistivity at 973 Kelvin, at nine Volts and under the application of direct current, of at least 10¹⁵ Ohm·m.

The substrate disk 33, the passivation layer 36 and the protective layer 37 are typically electrically insulating. That is, the substrate disk 33, the passivation layer 36 and the protective layer 37 are insulating at temperatures of 293 Kelvins and of approximately 973 Kelvins. More specifically, the substrate disk 33, the passivation layer 36 and the protection glass layer 37 are typically electrically insulating. That is, the disk 33, the passivation layer 36 and the protective glass layer 37 are insulating at temperatures of 293 Kelvins and of approximately 973 Kelvins.

A distance member 38 is arranged adjacent to the protective layer 37. More specifically, a distance member 38 can be arranged adjacent to the protective glass layer 37. The distance member 38 is situated such that a portion of the protective layer 37 is interposed between the distance member 38 and the passivation layer 36. More specifically, a portion of the protective glass layer 37 can be interposed between the distance member 38 and the passivation layer 36.

In an embodiment, the protective layer 37 is interposed between the distance member 38 and the passivation layer 36. More specifically, the protective glass layer 37 can be interposed between the distance member 38 and the passivation layer 36.

The direction used for measuring thicknesses of the substrate disk 33 can also be used to measure a thickness of the distance member 38. The thickness of the protective layer 37 is typically different from the thickness of the distance member 38. The protective layer 37 can, by way of non-limiting example, be thinner than the distance member 38 at least by a factor two. The protective layer 37 can, by way of another non-limiting example, be thinner than the distance member 38 at least by a factor five. The protective layer 37 can still be thinner than the distance member 38 at least by a factor ten.

More specifically, the thickness of the protective glass layer 37 is typically different from the thickness of the distance member 38. The protective glass layer 37 can, by way of non-limiting example, be thinner than the distance member 38 at least by a factor two. The protective glass layer 37 can, by way of another non-limiting example, be thinner than the distance member 38 at least by a factor five. The protective glass layer 37 can still be thinner than the distance member 38 at least by a factor ten.

It is envisaged that the distance member 38 comprises a distance piece. It is still envisaged that the distance member 38 is a distance piece.

The distance member 38 advantageously is electrically insulating. That is, the distance member 38 exhibits a resistivity at 293 Kelvins, at nine Volts and under the application of direct current, of at least 10¹³ Ohm·m. Preferably, the distance member 38 exhibits a volume resistivity at 293 Kelvins, at nine Volts and under the application of direct current, of at least 10¹⁴ Ohm·m. More preferably, the distance member 38 exhibits a resistivity at 293 Kelvin, at nine Volts and under the application of direct current, of at least 10¹⁶ Ohm·m.

In operation, the distance member 38 exhibits a resistivity at 973 Kelvins, at nine Volts and under the application of direct current, of at least 10¹² Ohm·m. Preferably, the distance member 38 exhibits a volume resistivity at 973 Kelvins, at nine Volts and under the application of direct current, of at least 10¹³ Ohm·m. More preferably, the distance member 38 exhibits a resistivity at 973 Kelvin, at nine Volts and under the application of direct current, of at least 10¹⁵ Ohm·m.

A sensor element 39 is arranged adjacent to the distance member 38. More specifically, a sensor element 39 can be arranged adjacent to the distance piece 38. The sensor element 39 is situated such that a portion of the distance member 38 is interposed between the sensor element 39 and the protective layer 37. More specifically, a portion of the distance piece 38 can be interposed between the sensor element 39 and the protective layer 37. Still more specifically, a portion of the distance piece 38 can be interposed between the sensor element 39 and the protective glass layer 37.

In an embodiment, the distance member 38 is interposed between the sensor element 39 and the protective layer 37. More specifically, the distance piece 38 can be interposed between the sensor element 39 and the protective layer 37. Still more specifically, the distance piece 38 can be interposed between the sensor element 39 and the protective glass layer 37.

The sensor element 39 can, by way of non-limiting example, comprise at least one of
- a resistance temperature detector such as
   o a Pt100 sensor element,
   ∘ a Pt1000 sensor element,
- a thermocouple,
- a thin film temperature detector.

The sensor element 39 can, by way of non-limiting example, be selected from
- a resistance temperature detector such as
   ∘ a Pt100 sensor element,
   ∘ a Pt1000 sensor element,
- a thermocouple,
- a thin film temperature detector.

It is envisaged that the sensor element 39 comprises a temperature sensing element. It is still envisaged that the sensor element 39 is a temperature sensing element.

A plurality 40 of terminals electrically and mechanically connects to the sensor element 39. In an embodiment, the plurality 40 of terminals comprises four terminals. More specifically, the plurality 40 of terminals can consist of four terminals.

The sensor element 39 can thus be supplied with an electric current via the plurality 40 of terminals thereby driving an electric current through the sensor element 39. Typically, two terminals out of the plurality 40 of terminals drive the electric current through the sensor element 39. Also, two terminals out of the plurality 40 of terminals record a drop ΔV of electric voltage in response to the electric current. The two terminals for driving the electric current through the sensor element 39 are ideally different from the two terminals for recording the voltage drop ΔV.

Preferably, at least one terminal of the plurality 40 of terminals galvanically connects to the sensor element 39. Ideally, all terminals of the plurality 40 of terminals galvanically connect to the sensor element 39. Preferably, at least one terminal of the plurality 40 of terminals is soldered and/or is welded to the sensor element 39. Ideally, each of the terminals is soldered and/or is welded to the sensor element 39.

A strain relief member can be applied where at least one terminal of the plurality 40 of terminals connects to the sensor element 39. The mechanical resilience and robustness of the connection is thus improved. The strain relief member can, by way of non-limiting example, comprise a portion made of glass. The strain relief member can, by way of non-limiting example, be made of glass.

A strain relief member can also be applied where all terminals of the plurality 40 of terminals connect to the sensor element 39. The mechanical resilience and robustness of the connection is thus improved. The strain relief member can, by way of non-limiting example, comprise a portion made of glass. The strain relief member can, by way of non-limiting example, be made of glass.

Preferably, at least one terminal of the plurality 40 of terminals comprises a metallic electric conductor. It is even envisaged that at least one terminal of the plurality 40 of terminals is a metallic electric conductor. Ideally, all terminals of the plurality 40 of terminals comprise a metallic electric conductor. In a special embodiment, each terminal of the plurality 40 of terminals is a metallic electric conductor. It is even envisaged that each terminal of the plurality 40 of terminals is a metallic electric conductor.

The plurality 40 of terminals thus enables four-terminal sensing of an electric resistivity R of the sensor element 39. Since the electric resistivity R of the sensor element 39 depends on temperature T $R = f \left(T\right) ,$ a temperature on the surface of the flue gas sensor 27 can be derived. In a special embodiment, a temperature of the flue gas sensor 27 can be derived from the electric resistivity R of the sensor element 39.

The system controller 16 can, by way of non-limiting example, comprise an analog-to-digital converter. A voltage drop ΔV as recorded via the plurality 40 of terminals from the sensor element 39 is supplied to the analog-to-digital converter. The analog-to-digital converter provides conversion of the voltage drop ΔV into (digital) measures. The analog-to-digital converter can be an integral part of the system controller 16. To achieve compactness, the analog-to-digital converter and the controller 16 can be arranged on the same system-on-a-chip.

The system controller 16 can, by way of non-limiting example, comprise a sigma-delta converter. A voltage drop ΔV as recorded via the plurality 40 of terminals from the sensor element 39 is supplied to the sigma-delta converter. The sigma-delta converter provides conversion of the voltage drop ΔV into (digital) measures. The sigma-delta converter can be an integral part of the system controller 16. To achieve compactness, the sigma-delta converter and the controller 16 can be arranged on the same system-on-a-chip.

The controller 16 advantageously comprises a microcontroller and/or a microprocessor. In an embodiment, the controller 16 is a microcontroller and/or is a microprocessor. The controller 16 preferably comprises a memory such as a non-volatile memory. That is, the controller 16 can comprise a microcontroller and a non-volatile memory. The controller 16 can also comprise a microprocessor and a non-volatile memory. The controller 16 can still be a microcontroller having a non-volatile memory. The controller 16 can also be a microprocessor having a non-volatile memory.

The controller 16 can thus use the electric current applied to the sensor element 39 and the recorded voltage drop ΔV to determine the resistivity of the sensor element 39. The controller 16 can even use the electric current applied to the sensor element 39 and the recorded voltage drop ΔV to calculate the resistivity of the sensor element 39. Once the resistivity of the sensor element 39 is known, the controller 16 can derive the temperature T. To that end, the controller 16 can rely on a lookup table stored in its memory.

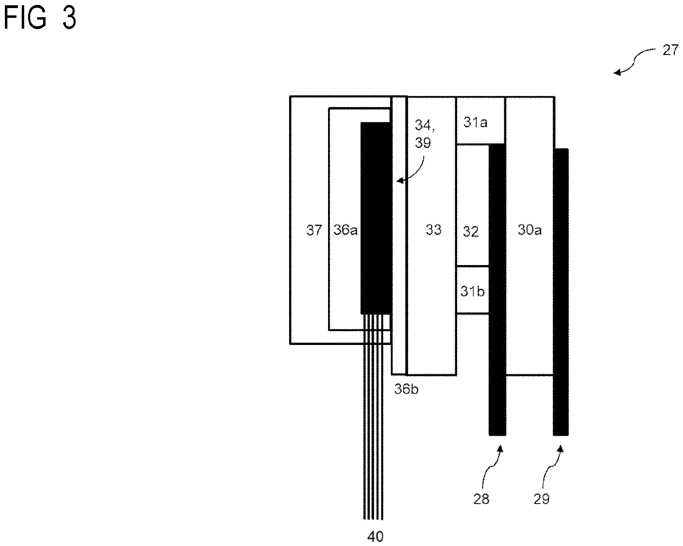

According to FIG 3, the reference electrode 28, the one or more spacers 31a, 31b and the at least one third disk 33 enclose the sealed chamber 32. One or more spacers 31a, 31b separate the at least one third disk 33 from the first sensor disk 30a. In this embodiment, the at least one third disk 33 contains yttrium stabilized zirconia. More specifically, the at least one third disk 33 can be made of yttrium stabilized zirconia.

Furthermore, the passivation layer can comprise several individual layers 36a, 36b. In addition, the passivation layer can consist of several individual layers 36a, 36b.

In this embodiment, the at least one third disk 33 can comprise at least one substrate disk 33. More specifically, the at least one third disk 33 can be at least one substrate disk 33.

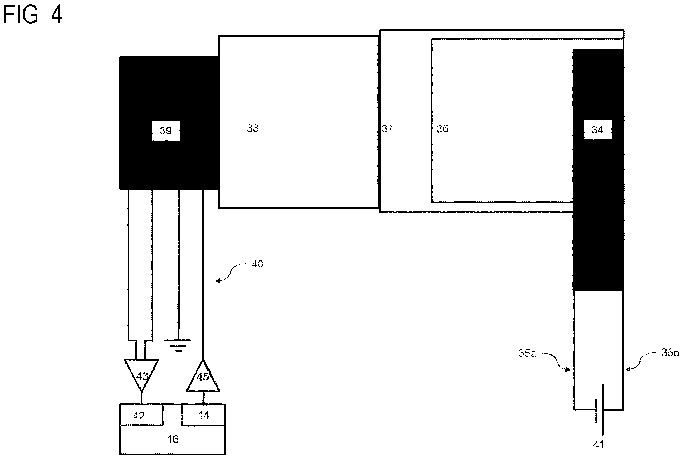

Now referring to FIG 4, details of the supply of the heater 34 are illustrated. A pair of terminals 35a, 35b connects to the heater 34. An electric current is applied to the heater 34 via the terminals 35a, 35b. The electric current through the heater 34 is supplied via a source 41.

The source 41 is separate from the source supplying the system controller 16. In an embodiment, the source 41 for supplying the heater 34 comprises a battery. The source 41 for supplying the heater 34 can also, by way of non-limiting example, be a battery. It is envisaged that the source 41 for supplying the heater 34 supplies a direct electric current.

In an alternate embodiment, a transformer is used to galvanically isolate the source 41 for supplying the heater 34 from any source supplying the system controller 16. Preferably, the same transformer also galvanically isolates the source 41 for supplying the heater 34 from the plurality 40 of terminals connecting to the sensor element 39. More specifically, the same transformer can also galvanically isolate the source 41 from the plurality 40 of terminals connecting to the temperature sensing element 39. Preferably, this transformer also galvanically isolates the source 41 for supplying the heater 34 from the reference terminal 28 and from the pump and sense terminal 29.

Advantageously, the transformer galvanically isolates the source 41 for supplying the heater 34 at least from
- the controller 16,
- the sensor element 39, and
- the plurality 40 of terminals.

Ideally, the transformer galvanically isolates the source 41 for supplying the heater 34 from
- the controller 16,
- the sensor element 39,
- the plurality 40 of terminals,
- the reference terminal 28, and
- the pump and sense terminal 29.

Optionally, a rectifier circuit can connect the transformer to the terminals 35a, 35b of the heater 34. The rectifier circuit ensures that a direct electric current is applied to the heater 34. In other words, the source 41 comprises a transformer and a rectifier. The rectifier circuit is then also galvanically isolated at least from
- the controller 16,
- the sensor element 39, and
- the plurality 40 of terminals.

The rectifier circuit ideally is galvanically isolated from
- the controller 16,
- the sensor element 39,
- the plurality 40 of terminals,
- the reference terminal 28, and
- the pump and sense terminal 29.

The galvanic isolation alleviates issues caused by space charges. In the absence of galvanic isolation, the electric current supplied to the heater 34 causes an electric field in the remainder of the flue gas sensor 27. The electric field causes charge carriers to move within the flue gas sensor 27. For example, charge carriers may move inside
- the passivation layer 36,
- the protective layer 37, and
- the distance member 38.

More specifically, charge carries may move inside
- the passivation layer 36,
- the protective glass layer 37, and
- the distance piece 38.

That movement of electric charges occurs despite the insulating properties of these members 36 - 38.

In consequence of such movement of charge carries, space charges build up inside the flue gas sensor 27. More specifically, space charges may build up inside
- the passivation layer 36,
- the protective layer 37, and
- the distance member 38.

Still more specifically, space charges may build up inside
- the passivation layer 36,
- the protective glass layer 37, and
- the distance piece 38.

These space charges can have an adverse effect on the measurements carried out via the sensor element 39 and/or the temperature sensing element 39. It has been found that galvanic isolation of the heater 34 from the remainder of the flue gas sensor 27 mitigates those adverse effects.

It is also illustrated in FIG 4 how a controller 16 such as the system controller can process signals originating from the sensor element 29. To that end, the controller 16 can comprise an analog-to-digital converter and/or a sigma-delta converter 42 as described above. The converter 42 converts signals originating from the sensor element 39 into digital measures. More specifically, the converter 42 can convert signals originating from the temperature sensing element 39 into digital measures.

Optionally, an amplifier 43 amplifies signals originating from the sensor element 39 and transmits the amplified voltage drop ΔV to the converter 42. To that end, the amplifier 43 connects to two terminals out of the plurality 40 of terminals. More specifically, an amplifier 43 can amplify signals originating from the temperature sensing element 39 and transmit the amplified voltage drop ΔV to the converter 42. To that end, the amplifier 43 connects to two terminals out of the plurality 40 of terminals.

It is explained above that an electric current is applied to the sensor element 39 and/or to the temperature sensing element 39. The electric current is applied as part of the four-terminal sensing of an electric resistivity R. To that end, the controller 16 can comprise a digital-to-analog converter 44. The digital-to-analog converter provides conversion of digital signals indicative of a current applied to the sensor element 39 into analog signals. The digital-to-analog converter 44 can be an integral part of the controller 16. To achieve compactness, the digital-to-analog converter 44 and the controller 16 can be arranged on the same system-on-a-chip. More specifically, the digital-to-analog converter 44 and the microcontroller are arranged on the same system-on-a-chip. It is also envisaged that the digital-to-analog converter 44 and the microprocessor are arranged on the same system-on-a-chip.

Optionally, an amplifier 45 amplifies signals originating from the digital-to-analog converter 44 and transmits an electric current to the sensor element 39. To that end, the amplifier 45 can comprise a voltage-to-current converter. The amplifier 45 can also be a voltage-to-current converter. To that end, the amplifier 43 connects to two terminals out of the plurality 40 of terminals. More specifically, an amplifier 45 amplifies signals originating from the digital-to-analog converter 44 and transmits an electric current to the temperature sensing element 39. To that end, the amplifier 45 can comprise a voltage-to-current converter. The amplifier 45 can also be a voltage-to-current converter.

It is envisaged that the
- controller 16,
- the analog-to-digital converter and/or the sigma-delta converter 42,
- the digital-to-analog converter 44, and
- the optional amplifiers 43 and 45,
are galvanically isolated from the heater 34. The galvanic isolation improves on mitigation of adverse effects caused by space charges.

It is still envisaged that the
- the controller 16,
- the sensor element 39,
- the plurality 40 of terminals,
- the reference terminal 28,
- the pump and sense terminal 29.
- the analog-to-digital converter and/or the sigma-delta converter 42,
- the digital-to-analog converter 44, and
- the optional amplifiers 43 and 45,
are galvanically isolated from the heater 34. The galvanic isolation still improves on mitigation of adverse caused by space charges.

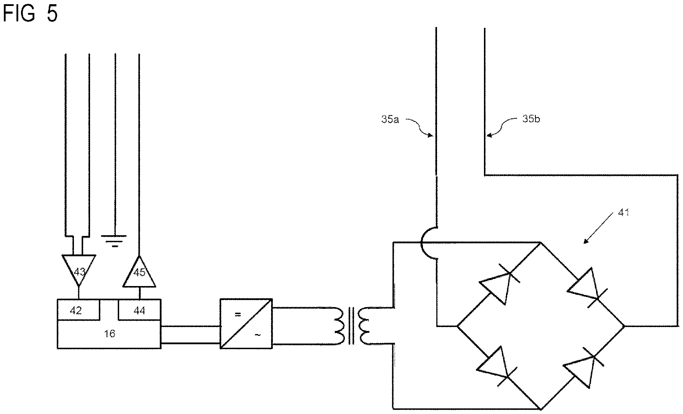

Now referring to FIG 5, a transformer galvanically isolating the temperature sensing element 39 and the circuit 16, 42 - 45 from the heater 34 is shown. To that end, a first inverter receives a direct current from the circuit 16, 42 - 45. The direct current can, by way of non-limiting example, be received from pins of the controller 16, wherein the controller 16 comprises a microcontroller and/or a microprocessor.

The first inverter changes the direct current into an alternating current. The alternating current is then fed to the primary winding of a transformer. A secondary winding of the transformer is galvanically isolated from the primary winding of the transformer and feeds a first rectifier. The first rectifier electrically connects to the electric source 41, thereby also connecting to the heater 34. In an embodiment, the first rectifier acts as the electric source supplying the heater 34.

It is worth mentioning that the transformer can also receive an alternating current from the circuit 16, 42 - 45. An inverter is then not necessary.

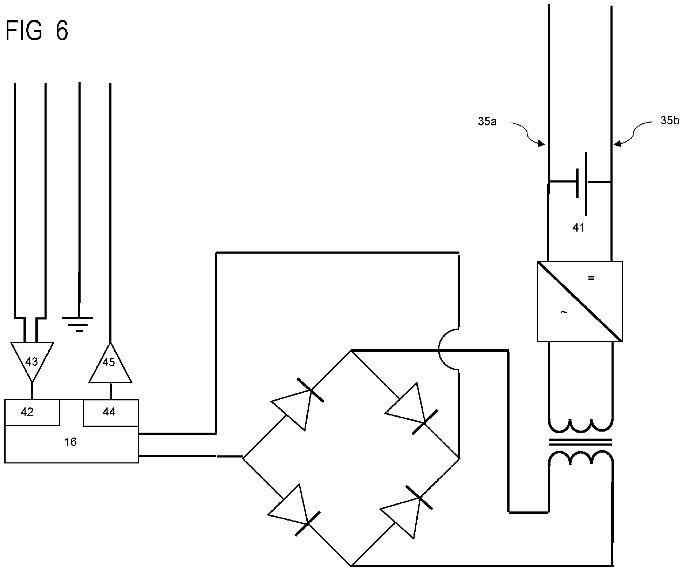

Now turning to FIG 6, a transformer galvanically isolating the temperature sensing element 39 and the circuit 16, 42 - 45 from the heater 34 is shown. To that end, a second inverter receives a direct current from the electric source 41.

The second inverter changes the direct current into an alternating current. The alternating current is then fed to the secondary winding of the transformer. A primary winding of the transformer is galvanically isolated from the secondary winding of the transformer and feeds a second rectifier. The second rectifier electrically connects to the circuit 16, 42 - 45. The circuit 16, 42 - 45 can, by way of non-limiting example, receive the rectified current via pins of the controller 16, the controller 16 comprising a microcontroller. The circuit 16, 42 - 45 can still receive the rectified current via pins of the controller 16, the controller 16 comprising a microprocessor.

It is worth mentioning that the transformer can also receive an alternating current from the electric source 41. The electric source 41 then is an electric source of alternating current and an inverter can be dispensed with.

As described in detail herein, the present disclosure deals with a sensor (27) for estimating a concentration of oxygen, the sensor (27) comprising:
a reference terminal (28), a pump and sense terminal (29), a first sensor disk (30a), a second sensor disk (30b), and one or more spacers (31a, 31b), wherein the second sensor disk (30b), the one or more spacers (31a, 31b) and the reference terminal (28) enclose a sealed chamber (32);
the sensor (27) comprising a heater (34) and a pair of electric terminals (35a, 35b) galvanically connected to the heater (34);
the sensor (27) comprising at least one third disk (33) interposed between the heater (34) and the second sensor disk (30b);
the sensor (27) comprising a temperature sensing element (39) and a plurality of electric terminals (40) connected to the temperature sensing element (39) and a distance member (38) interposed between the temperature sensing element (39) and the heater (34);
the sensor (27) comprising an electric supply (41) connected to the heater (34) via the pair of electric terminals (35a, 35b); and
the sensor (27) comprising an electric circuit (16, 42 - 45) electrically connected to the temperature sensing element (39) via the plurality of electric terminals (40);
wherein the electric circuit (16, 42 - 45) is galvanically isolated from the electric supply (41).

The present disclosure also deals with a sensor (27) for estimating a concentration of oxygen, the sensor (27) comprising:
a reference terminal (28), a pump and sense terminal (29), a first sensor disk (30a), a boundary member selected from a second sensor disk (30b) and at least one third disk (33), and one or more spacers (31a, 31b), wherein the boundary member (30b, 33), the one or more spacers (31a, 31b) and the reference terminal (28) enclose a sealed chamber (32);
the sensor (27) comprising a heater (34) and a pair of electric terminals (35a, 35b) galvanically connected to the heater (34);
wherein the boundary member (30b, 33) is interposed between the heater (34) and the sealed chamber (32);
the sensor (27) comprising a temperature sensing element (39) and a plurality of electric terminals (40) connected to the temperature sensing element (39);
the sensor (27) comprising an electric supply (41) connected to the heater (34) via the pair of electric terminals (35a, 35b); and
the sensor (27) comprising an electric circuit (16, 42 - 45) electrically connected to the temperature sensing element (39) via the plurality of electric terminals (40);
wherein the electric circuit (16, 42 - 45) is galvanically isolated from the electric supply (41).

In an embodiment, the sensor (27) for estimating a concentration of oxygen comprises a gas sensor (27) for estimating a concentration of oxygen. In a special embodiment, the sensor (27) for estimating a concentration of oxygen is a gas sensor (27) for estimating a concentration of oxygen. In a related embodiment, the sensor (27) for estimating a concentration of oxygen comprises a sensor (27) for determining a concentration of oxygen. In a special embodiment, the sensor (27) for estimating a concentration of oxygen is a sensor (27) for determining a concentration of oxygen. The sensor (27) for estimating a concentration of oxygen can also comprise a gas sensor (27) for determining a concentration of oxygen. The sensor (27) for estimating a concentration of oxygen can still be a gas sensor (27) for determining a concentration of oxygen.

According to an aspect of the present disclosure, the sensor (27) comprises the sealed chamber (32). The sealed chamber (32) is preferably sealed from the ambient of the sensor (27). That is, the sealed chamber (32) is sealed from a space surrounding the sensor (27). The sealed chamber (32) is preferably sealed from a space surrounding the sensor (27) via at least:
the boundary member selected from the second sensor disk (30b) and the at least one third disk (33),
the one or more spacers (31a, 31b), and
the reference terminal (28).

The sealed chamber (32) is advantageously sealed via at least:
the boundary member selected from the second sensor disk (30b) and the at least one third disk (33),
the one or more spacers (31a, 31b),
the reference terminal (28), and
the first sensor disk (30a).

The sealed chamber (32) is ideally sealed from a space surrounding the sensor (27) via at least:
the boundary member selected from the second sensor disk (30b) and the at least one third disk (33),
the one or more spacers (31a, 31b),
the reference terminal (28), and
the first sensor disk (30a).

The sealed chamber (32) can also be formed in between:
the boundary member selected from the second sensor disk (30b) and the at least one third disk (33),
the one or more spacers (31a, 31b), and
the reference terminal (28).

The sealed chamber (32) can still be formed in between:
the boundary member selected from the second sensor disk (30b) and the at least one third disk (33),
the one or more spacers (31a, 31b),
the reference terminal (28), and
the first sensor disk (30a).

It is envisaged that the at least one third disk (33) is directly interposed between the heater (34) and the second sensor disk (30b). Where the at least one third disk (33) is directly interposed between the heater (34) and the second sensor disk (30b), no other member and no other element is interposed between the heater (34) and the second sensor disk (30b). The at least one third disk (33) can comprise at least one substrate disk. The at least one third disk (33) can be at least one substrate disk.

In the embodiment of FIG 3, the at least one third disk (33) can be interposed between the heater (34) and the one or more spacers (31a, 31b). The at least one third disk (33) can comprise at least one substrate disk. The at least one third disk (33) can be at least one substrate disk.

In the embodiment of FIG 3, the at least one third disk (33) can be directly interposed between the heater (34) and the sealed chamber (32). Where the at least one third disk (33) is directly interposed between the heater (34) and the sealed chamber (32), no other member and no other element is interposed between the heater (34) and the sealed chamber (32). The at least one third disk (33) can comprise at least one substrate disk. The at least one third disk (33) can be at least one substrate disk.

In a preferred embodiment, the pair of electric terminals (35a, 35b) is different from the plurality of electric terminals (40). Advantageously, the pair of electric terminals (35a, 35b) is separate from the plurality of electric terminals (40).

In a preferred embodiment, the electric supply (41) is different from the electric circuit (16, 42 - 45). Advantageously, the electric supply (41) is separate from the electric circuit (16, 42 - 45). In any case, the electric supply (41) is galvanically isolated from the electric circuit (16, 42 - 45).

It is envisaged that the electric supply (41) comprises an electric supply for the heater (34). It is still envisaged that the electric supply (41) is an electric supply for the heater (34). It also envisaged that the electric supply (41) comprises an electric supply of the heater (34). It is still envisaged that the electric supply (41) is an electric supply of the heater (34).

The electric supply (41) is advantageously galvanically connected to the heater (34) via the pair of electric terminals (35a, 35b).

According to an aspect of the present disclosure, the electric circuit (16, 42 - 45) comprises an electronic circuit (16, 42 - 45) and the electric supply (41) is galvanically isolated from the electronic circuit (16, 42 - 45). According to a special aspect of the present disclosure, the electric circuit (16, 42 - 45) is an electronic circuit (16, 42 - 45) and the electric supply (41) is galvanically isolated from the electronic circuit (16, 42 - 45).

The present disclosure also deals with any of the aforementioned sensors (27), wherein the reference terminal (28) and the pump and sense terminal (29) are galvanically isolated from the electric supply (41).

Galvanic isolation between the reference terminal (28) and the pump and sense terminal (29) on the one hand and the electric supply (41) on the other hand mitigates drifts of signals originating from the terminals (28, 29).

The present disclosure also deals with any of the aforementioned sensors (27), wherein the sensor (27) comprises a transformer; and
wherein the transformer galvanically isolates the electric circuit (16, 42 - 45) from the electric supply (41).

It is still envisaged that a or the transformer galvanically isolates the reference terminal (28) and the pump and sense terminal (29) from the electric supply (41).

The present disclosure also deals with any of the aforementioned sensors (27), wherein the transformer comprises a primary winding and a secondary winding;
wherein the primary winding of the transformer is galvanically isolated from the secondary winding of the transformer; and
wherein the primary winding galvanically connects to the electric circuit (16, 42 - 45) and the secondary winding galvanically connects to the electric supply (41).

The instant disclosure also pertains to any of the aforementioned sensors (27) comprising a transformer and an electronic circuit (16, 42 - 45);
wherein the primary winding of the transformer is galvanically isolated from the secondary winding of the transformer; and
wherein the primary winding galvanically connects to the electronic circuit (16, 42 - 45) and the secondary winding galvanically connects to the electric supply (41).

In other words, the transformer is different from an autotransformer.

The present disclosure also deals with any of the aforementioned sensors (27) involving a transformer with galvanically isolated windings, wherein the sensor (27) comprises a first inverter;
wherein the electric circuit (16, 42 - 45) electrically connects to the first inverter; and
wherein the first inverter electrically connects to the primary winding of the transformer.

The present disclosure also pertains to any of the aforementioned sensors (27) comprising a transformer and a primary winding, wherein the sensor (27) comprises a first inverter;
wherein the electric circuit (16, 42 - 45) galvanically connects to the first inverter; and
wherein the first inverter galvanically connects to the primary winding of the transformer.

The instant disclosure still pertains to any of the aforementioned sensors (27) comprising a transformer and a primary winding and involving an electronic circuit (16, 42 - 45), wherein the sensor (27) comprises a first inverter;
wherein the electronic circuit (16, 42 - 45) electrically connects to the first inverter; and
wherein the first inverter electrically connects to the primary winding of the transformer.

The present disclosure still further pertains to any of the aforementioned sensors (27) comprising a transformer and a primary winding and involving an electronic circuit (16, 42 - 45), wherein the sensor (27) comprises a first inverter;
wherein the electronic circuit (16, 42 - 45) galvanically connects to the first inverter; and
wherein the first inverter galvanically connects to the primary winding of the transformer.

The first inverter changes direct currents originating from the circuit (16, 42 - 45) into alternating currents applied to the primary winding of the transformer. The transformer then provides galvanic isolation between the electric circuit (16, 42 - 45) and the electric supply (41). Likewise, the transformer can also provide galvanic isolation between the electronic circuit (16, 42 - 45) and the electric supply (41). The transformer can still provide galvanic isolation between the first inverter and the electric supply (41).

The present disclosure also deals with any of the aforementioned sensors (27) involving a first inverter, wherein the sensor (27) comprises a first rectifier;
wherein the secondary winding galvanically connects to the electric supply (41) via the first rectifier.

The instant disclosure also pertains to any of the aforementioned sensors (27) comprising a transformer and a secondary winding, wherein the sensor (27) comprises a first bridge rectifier; and
wherein the secondary winding galvanically connects to the electric supply (41) via the first bridge rectifier.

A first bridge rectifier affords full-wave rectification of electric currents originating from the secondary winding of the transformer.

The present disclosure also deals with any of the aforementioned sensors (27) involving a transformer with galvanically isolated windings, wherein the sensor (27) comprises a second inverter;
wherein the electric supply (41) electrically connects to the second inverter; and
wherein the second inverter electrically connects to the secondary winding of the transformer.

The second inverter is different from the first inverter.

The instant disclosure also pertains to any of the aforementioned sensors (27) comprising a transformer and a secondary winding,
wherein the sensor (27) comprises a second inverter;
wherein the electric supply (41) galvanically connects to the second inverter; and
wherein the second inverter galvanically connects to the secondary winding of the transformer.

It is envisaged that the second inverter is different from the electric circuit (16, 42 - 45). It is also envisaged that the second inverter is separate from the electric circuit (16, 42 - 45). It is still envisaged that the second inverter is different from the electronic circuit (16, 42 - 45). It is also envisaged that the second inverter is separate from the electronic circuit (16, 42 - 45).

The second inverter changes direct currents originating from the electric supply (41) into alternating currents applied to the secondary winding of the transformer. The transformer then provides galvanic isolation between the electric supply (41) and the electric circuit (16, 42 - 45). Likewise, the transformer can also provide galvanic isolation between the electric supply (41) and the electronic circuit (16, 42 - 45). The transformer can still provide galvanic isolation between the second inverter and the electronic circuit (16, 42 - 45).

The present disclosure also deals with any of the aforementioned sensors (27) involving a second inverter, wherein the sensor (27) comprises a second rectifier; and
wherein the primary winding galvanically connects to the electric circuit (16, 42 - 45) via the second rectifier.

The second rectifier is different from the first rectifier.

The instant disclosure also pertains to any of the aforementioned sensors (27) comprising a transformer and a primary winding, wherein the sensor (27) comprises a second bridge rectifier; and
wherein the primary winding galvanically connects to the electric circuit (16, 42 - 45) via the second bridge rectifier.

A second bridge rectifier affords full-wave rectification of electric currents originating from the primary winding of the transformer.

The second bridge rectifier is different from the first bridge rectifier.

The present disclosure also deals with any of the aforementioned sensors (27), wherein the electric circuit (16, 42 - 45) galvanically connects to the temperature sensing element (39) via the plurality of electric terminals (40).

The present disclosure also pertains to any of the aforementioned sensors (27) involving an electronic circuit (16, 42 - 45), wherein the electronic circuit (16, 42 - 45) galvanically connects to the temperature sensing element (39) via the plurality of electric terminals (40).

The present disclosure also deals with any of the aforementioned sensors (27), wherein the second sensor disk (30b) and the first sensor disk (30a) each comprise at least ninety percent by weight of a metal oxide. It is envisaged that the second sensor disk (30b) and the first sensor disk (30a) each comprise at least ninety percent by weight of zirconium dioxide.

The present disclosure also deals with any of the aforementioned sensors (27) involving a boundary member (30b, 33), wherein the boundary member (30b, 33) and the first sensor disk (30a) each comprise at least ninety percent by weight of a metal oxide. It is envisaged the boundary member (30b, 33) and the first sensor disk (30a) each comprise at least ninety percent by weight of zirconium dioxide.

The present disclosure also deals with any of the aforementioned sensors (27), wherein the
sensor (27) comprises at least one passivation layer (36, 36a, 36b) and a distance member (38) interposed between the temperature sensing element (39) and the heater (34);
wherein the at least one passivation layer (36, 36a, 36b) is situated adjacent to the heater (34); and
wherein the at least one passivation layer (36, 36a, 36b) is interposed between the distance member (38) and the heater (34).

The instant disclosure also pertains to any of the aforementioned sensors (27), wherein the sensor (27) comprises at least one passivation layer (36, 36a, 36b) and a distance member (38) interposed between the temperature sensing element (39) and the heater (34);
wherein the at least one passivation layer (36, 36a, 36b) abuts the heater (34); and
wherein the at least one passivation layer (36, 36a, 36b) is interposed between the distance member (38) and the heater (34).

The present disclosure also deals with any of the aforementioned sensors (27) involving at least one passivation layer (36, 36a, 36b), wherein the distance member (38) comprises a first side and a second side, the first side being different from the second side;
wherein the first side of the distance member (38) directly faces the temperature sensing element (39); and
wherein the at least one passivation layer (36, 36a, 36b) is interposed between the second side of the distance member (38) and the heater (34).

The instant disclosure also pertains to any of the aforementioned sensors (27) involving at least one passivation layer (36, 36a, 36b), wherein the distance member (38) comprises a first side and a second side, the first side being different from the second side;
wherein the first side of the distance member (38) is arranged opposite to the second side of the distance member (38);
wherein the first side of the distance member (38) directly faces the temperature sensing element (39); and
wherein the at least one passivation layer (36, 36a, 36b) is interposed between the second side of the distance member (38) and the heater (34).

The first side of the distance member (38) and the second side of the distance member (38) form opposite sides of the distance member (38).

Where the first side of the distance member (38) directly faces the temperature sensing element (39), no other member and no other element is interposed between the distance member (38) and the temperature sensing element (39).

The present disclosure also deals with any of the aforementioned sensors (27), wherein the
sensor (27) comprises a protective layer (37);
wherein the protective layer (37) is situated adjacent to the distance member (38); and
wherein the protective layer (37) is interposed between the distance member (38) and the heater (34).

The instant disclosure also pertains to any of the aforementioned sensors (27), wherein the
sensor (27) comprises a protective layer (37);
wherein the protective layer (37) abuts the heater (34); and
wherein the protective layer (37) is interposed between the distance member (38) and the heater (34).

The present disclosure still pertains to any of the aforementioned sensors (27), wherein the
sensor (27) comprises a protective layer (37) and at least one passivation layer (36, 36a, 36b) and a distance member (38) interposed between the temperature sensing element (39) and the heater (34);
wherein the protective layer (37) is situated adjacent to the distance member (38);
wherein the at least one passivation layer (36, 36a, 36b) is situated adjacent to the heater (34);
wherein the protective layer (37) is situated adjacent to the at least one passivation layer (36, 36a, 36b); and
wherein the protective layer (37) and the at least one passivation layer (36, 36a, 36b) are interposed between the distance member (38) and the heater (34).

The instant disclosure still further pertains to any of the aforementioned sensors (27), wherein the sensor (27) comprises a protective layer (37) and at least one passivation layer (36, 36a, 36b) and a distance member (38) interposed between the temperature sensing element (39) and the heater (34);
wherein the protective layer (37) abuts the distance member (38);
wherein the at least one passivation layer (36, 36a, 36b) abuts the heater (34);
wherein the protective layer (37) abuts the at least one passivation layer (36, 36a, 36b); and
wherein the protective layer (37) and the at least one passivation layer (36, 36a, 36b) are interposed between the distance member (38) and the heater (34).

The present disclosure also deals with any of the aforementioned sensors (27) involving a protective layer (37), wherein the distance member (38) comprises a or the first side and a or the second side, the first side being different from the second side;
wherein the first side of the distance member (38) faces the temperature sensing element (39); and
wherein the protective layer (37) is interposed between the second side of the distance member (38) and the heater (34).

The instant disclosure also pertains to any of the aforementioned sensors (27) involving protective layer (37), wherein the distance member (38) comprises a or the first side and a or the second side, the first side being different from the second side;
wherein the first side of the distance member (38) is arranged opposite to the second side of the distance member (38);
wherein the first side of the distance member (38) directly faces the temperature sensing element (39); and
wherein the protective layer (37) is interposed between the second side of the distance member (38) and the heater (34).

The first side of the distance member (38) and the second side of the distance member (38) form opposite sides of the distance member (38).

Where the first side of the distance member (38) directly faces the temperature sensing element (39), no other member and no other element is interposed between the distance member (38) and the temperature sensing element (39).

In an embodiment, the distance member (38) comprises a or the first side and a or the second side, the first side being different from the second side;
wherein the first side of the distance member (38) directly faces the temperature sensing element (39); and
wherein the second side of the distance member (38) directly faces the protective layer (37).

Where the first side of the distance member (38) directly faces the temperature sensing element (39), no other member and no other element is interposed between the distance member (38) and the temperature sensing element (39). Where the second side of the distance member (38) directly faces the protective layer (37), no other member and no other element is interposed between the distance member (38) and the protective layer (37).

The present disclosure also deals with any of the aforementioned sensors (27), wherein the electric circuit (16, 42 - 45) comprises a first amplifier (43); and
wherein at least two terminals of the plurality of electric terminals (40) electrically connect to the first amplifier (43).

The instant disclosure also pertains to any of the aforementioned sensors (27), wherein the electric circuit (16, 42 - 45) comprises a first amplifier (43); and
wherein at least two terminals of the plurality of electric terminals (40) galvanically connect to the first amplifier (43).

The present disclosure still pertains to any of the aforementioned sensors (27) involving an electronic circuit (16, 42 - 45), wherein the electronic circuit (16, 42 - 45) comprises a first amplifier (43); and
wherein at least two terminals of the plurality of electric terminals (40) electrically connect to the first amplifier (43).

The instant disclosure still further pertains to any of the aforementioned sensors (27) involving an electronic circuit (16, 42 - 45), wherein the electronic circuit (16, 42 - 45) comprises a first amplifier (43); and
wherein at least two terminals of the plurality of electric terminals (40) galvanically connect to the first amplifier (43).

The present disclosure also pertains to any of the aforementioned sensors (27), wherein the electric circuit (16, 42 - 45) comprises a first operational amplifier (43); and
wherein at least two terminals of the plurality of electric terminals (40) electrically connect to the first operational amplifier (43).

The instant disclosure still pertains to any of the aforementioned sensors (27), wherein the electric circuit (16, 42 - 45) comprises a first operational amplifier (43); and
wherein at least two terminals of the plurality of electric terminals (40) galvanically connect to the first operational amplifier (43).

The present disclosure still further pertains to any of the aforementioned sensors (27) involving an electronic circuit (16, 42 - 45), wherein the electronic circuit (16, 42 - 45) comprises a first operational amplifier (43); and
wherein at least two terminals of the plurality of electric terminals (40) electrically connect to the first operational amplifier (43).

The instant disclosure yet further pertains to any of the aforementioned sensors (27) involving an electronic circuit (16, 42 - 45), wherein the electronic circuit (16, 42 - 45) comprises a first operational amplifier (43); and
wherein at least two terminals of the plurality of electric terminals (40) galvanically connect to the first operational amplifier (43).

Any steps of a procedure according to the present disclosure can be embodied in hardware and/or in a software module executed by a processor. Any steps of such a procedure can also be embodied in a software module executed by a processor inside a container using operating system level virtualisation. Any steps of such a procedure can still be embodied in a cloud computing arrangement. It is envisaged that any steps of a procedure according to the present disclosure is implemented in a combination of the above embodiments. The software may include a firmware and/or a hardware driver run by the operating system and/or an application program. Thus, the disclosure also relates to a non-transitory computer program product for performing the operations presented herein. If implemented in software, the functions described may be stored as one or more instructions on a computer-readable and non-transitory medium. Storage media that can be used include, by way of non-limiting examples, random access memory (RAM) and/or read only memory (ROM) and/or flash memory. Storage media can, by way of non-limiting examples, also include EPROM memory and/or EEPROM memory and/or registers and/or a hard disk and/or a removable disk. Further storage media can, by way of non-limiting examples, include other optical disks and/or any available media that can be accessed by a computer. Storage media can still, by way of non-limiting example, include any other IT equipment and appliance.

It should be understood that the foregoing relates only to certain embodiments of the disclosure. Numerous changes may be made therein without departing from the scope of the disclosure as defined by the following claims. It should also be understood that the disclosure is not restricted to the illustrated embodiments. Various modifications can be made within the scope of the following claims.

### Reference numerals

1 burner
2 heat consumer (heat exchanger), in particular combustion chamber
3 fan
4 damper or valve (with motorized adjustment)
5 fluid flow (mass flow) in main duct, air flow, air throughflow
6 fluid flow of a combustible fluid, fuel throughput
7, 8 safety valve
9 damper or valve (with motorized adjustment)
10 waste gas flow, exhaust gas flow
11 feed duct (air duct)
12 connector
13 flow sensor
14 flow resistance element (diaphragm)
15 throughflow (flow, mass flow) in the side duct
16 controller
17 - 22 signal lines
23 air inlet
24 side duct
25 exhaust gas path
26 signal line
27 flue gas sensor
28 reference terminal
29 pump and sense terminal
30a, 30b sensor disks
31a, 31b spacer(s)
32 sealed chamber
33 at least one third disk, substrate disk
34 heater
35a, 35b terminals
36, 36a, 36b passivation layer
37 protective layer
38 distance member, distance piece
39 sensor element
40 plurality of terminals
41 source
42 analog-to-digital converter and/or delta-sigma converter
43 optional amplifier
44 digital-to-analog converter
45 optional amplifier

## Claims

1. A sensor (27) for estimating a concentration of oxygen, the sensor (27) comprising:
a reference terminal (28), a pump and sense terminal (29), a first sensor disk (30a), a boundary member selected from a second sensor disk (30b) and at least one third disk (33), and one or more spacers (31a, 31b), wherein the boundary member (30b, 33), the one or more spacers (31a, 31b) and the reference terminal (28) enclose a sealed chamber (32);
the sensor (27) comprising a heater (34) and a pair of electric terminals (35a, 35b) galvanically connected to the heater (34);
wherein the boundary member (30b, 33) is interposed between the heater (34) and the sealed chamber (32);
the sensor (27) comprising a temperature sensing element (39) and a plurality of electric terminals (40) connected to the temperature sensing element (39);
the sensor (27) comprising an electric supply (41) connected to the heater (34) via the pair of electric terminals (35a, 35b); and
the sensor (27) comprising an electric circuit (16, 42 - 45) electrically connected to the temperature sensing element (39) via the plurality of electric terminals (40);
wherein the electric circuit (16, 42 - 45) is galvanically isolated from the electric supply (41).

2. The sensor (27) according to claim 1, wherein the reference terminal (28) and the pump and sense terminal (29) are galvanically isolated from the electric supply (41).

3. The sensor (27) according to any of the claims 1 to 2, wherein the sensor (27) comprises a transformer; and
wherein the transformer galvanically isolates the electric circuit (16, 42 - 45) from the electric supply (41).

4. The sensor (27) according to claim 3, wherein the transformer comprises a primary winding and a secondary winding;
wherein the primary winding of the transformer is galvanically isolated from the secondary winding of the transformer; and
wherein the primary winding galvanically connects to the electric circuit (16, 42 - 45) and the secondary winding galvanically connects to the electric supply (41).

5. The sensor (27) according to claim 4, wherein the sensor (27) comprises a first inverter;
wherein the electric circuit (16, 42 - 45) electrically connects to the first inverter; and
wherein the first inverter electrically connects to the primary winding of the transformer.

6. The sensor (27) according to claim 5, wherein the sensor (27) comprises a first rectifier;
wherein the secondary winding galvanically connects to the electric supply (41) via the first rectifier.

7. The sensor (27) according to claim 4, wherein the sensor (27) comprises a second inverter;
wherein the electric supply (41) electrically connects to the second inverter; and
wherein the second inverter electrically connects to the secondary winding of the transformer.

8. The sensor (27) according to claim 7, wherein the sensor (27) comprises a second rectifier; and
wherein the primary winding galvanically connects to the electric circuit (16, 42 - 45) via the second rectifier.

9. The sensor (27) according to any of the claims 1 to 8, wherein the electric circuit (16, 42 - 45) galvanically connects to the temperature sensing element (39) via the plurality of electric terminals (40).

10. The sensor (27) according to any of the claims 1 to 9, wherein the boundary member (30b, 33) and the first sensor disk (30a) each comprise at least ninety percent by weight of a metal oxide.

11. The sensor (27) according to any of the claims 1 to 10, wherein the sensor (27) comprises at least one passivation layer (36, 36a, 36b) and a distance member (38) interposed between the temperature sensing element (39) and the heater (34);
wherein the at least one passivation layer (36, 36a, 36b) is situated adjacent to the heater (34); and
wherein the at least one passivation layer (36, 36a, 36b) is interposed between the distance member (38) and the heater (34).

12. The sensor (27) according to claim 11, wherein the distance member (38) comprises a first side and a second side, the first side being different from the second side;
wherein the first side of the distance member (38) directly faces the temperature sensing element (39); and
wherein the at least one passivation layer (36, 36a, 36b) is interposed between the second side of the distance member (38) and the heater (34).

13. The sensor (27) according to claim 12, wherein the sensor (27) comprises a protective layer (37);
wherein the protective layer (37) is situated adjacent to the distance member (38); and
wherein the protective layer (37) is interposed between the distance member (38) and the heater (34).

14. The sensor (27) according to claim 13, wherein the distance member (38) comprises a or the first side and a or the second side, the first side being different from the second side;
wherein the first side of the distance member (38) faces the temperature sensing element (39); and
wherein the protective layer (37) is interposed between the second side of the distance member (38) and the heater (34).

15. The sensor (27) according to any of the claims 1 to 14, wherein the electric circuit (16, 42 - 45) comprises a first amplifier (43); and
wherein at least two terminals of the plurality of electric terminals (40) electrically connect to the first amplifier (43).

## Amended claims

### Amended claims in accordance with Rule 137(2) EPC.

1. A sensor (27) for estimating a concentration of oxygen, the sensor (27) comprising:
a reference terminal (28), a pump and sense terminal (29), a first sensor disk (30a), a boundary member selected from a second sensor disk (30b) and at least one third disk (33), and one or more spacers (31a, 31b), wherein the boundary member (30b, 33), the one or more spacers (31a, 31b) and the reference terminal (28) enclose a sealed chamber (32);
the sensor (27) comprising a heater (34) and a pair of electric terminals (35a, 35b) galvanically connected to the heater (34);
wherein the boundary member (30b, 33) is interposed between the heater (34) and the sealed chamber (32);
the sensor (27) comprising a temperature sensing element (39) and a plurality of electric terminals (40) connected to the temperature sensing element (39);
the sensor (27) comprising an electric supply (41) connected to the heater (34) via the pair of electric terminals (35a, 35b); and
the sensor (27) comprising an electric circuit (16, 42 - 45) electrically connected to the temperature sensing element (39) via the plurality of electric terminals (40);
**characterised in that**
the electric circuit (16, 42 - 45) is galvanically isolated from the electric supply (41).

2. The sensor (27) according to claim 1, wherein the reference terminal (28) and the pump and sense terminal (29) are galvanically isolated from the electric supply (41).

3. The sensor (27) according to any of the claims 1 to 2, wherein the sensor (27) comprises a transformer; and
wherein the transformer galvanically isolates the electric circuit (16, 42 - 45) from the electric supply (41).

4. The sensor (27) according to claim 3, wherein the transformer comprises a primary winding and a secondary winding;
wherein the primary winding of the transformer is galvanically isolated from the secondary winding of the transformer; and
wherein the primary winding galvanically connects to the electric circuit (16, 42 - 45) and the secondary winding galvanically connects to the electric supply (41).

5. The sensor (27) according to claim 4, wherein the sensor (27) comprises a first inverter;
wherein the electric circuit (16, 42 - 45) electrically connects to the first inverter; and
wherein the first inverter electrically connects to the primary winding of the transformer.

6. The sensor (27) according to claim 5, wherein the sensor (27) comprises a first rectifier;
wherein the secondary winding galvanically connects to the electric supply (41) via the first rectifier.

7. The sensor (27) according to claim 4, wherein the sensor (27) comprises a second inverter;
wherein the electric supply (41) electrically connects to the second inverter; and
wherein the second inverter electrically connects to the secondary winding of the transformer.

8. The sensor (27) according to claim 7, wherein the sensor (27) comprises a second rectifier; and
wherein the primary winding galvanically connects to the electric circuit (16, 42 - 45) via the second rectifier.

9. The sensor (27) according to any of the claims 1 to 8, wherein the electric circuit (16, 42 - 45) galvanically connects to the temperature sensing element (39) via the plurality of electric terminals (40).

10. The sensor (27) according to any of the claims 1 to 9, wherein the boundary member (30b, 33) and the first sensor disk (30a) each comprise at least ninety percent by weight of a metal oxide.

11. The sensor (27) according to any of the claims 1 to 10, wherein the sensor (27) comprises at least one passivation layer (36, 36a, 36b) and a distance member (38) interposed between the temperature sensing element (39) and the heater (34);
wherein the at least one passivation layer (36, 36a, 36b) is situated adjacent to the heater (34); and
wherein the at least one passivation layer (36, 36a, 36b) is interposed between the distance member (38) and the heater (34).

12. The sensor (27) according to claim 11, wherein the distance member (38) comprises a first side and a second side, the first side being different from the second side;
wherein the first side of the distance member (38) directly faces the temperature sensing element (39); and
wherein the at least one passivation layer (36, 36a, 36b) is interposed between the second side of the distance member (38) and the heater (34).

13. The sensor (27) according to claim 12, wherein the sensor (27) comprises a protective layer (37);
wherein the protective layer (37) is situated adjacent to the distance member (38); and
wherein the protective layer (37) is interposed between the distance member (38) and the heater (34).

14. The sensor (27) according to claim 13, wherein the distance member (38) comprises a or the first side and a or the second side, the first side being different from the second side;
wherein the first side of the distance member (38) faces the temperature sensing element (39); and
wherein the protective layer (37) is interposed between the second side of the distance member (38) and the heater (34).

15. The sensor (27) according to any of the claims 1 to 14, wherein the electric circuit (16, 42 - 45) comprises a first amplifier (43); and
wherein at least two terminals of the plurality of electric terminals (40) electrically connect to the first amplifier (43).
